# EUROPEAN PATENT APPLICATION

(11) **EP 2 957 660 A1**
(43) Date of publication of application: **23.12.2015**
(21) Application number: 14752012.6
(22) Date of filing: 10.02.2014
(51) Int. Cl.: C25D 3/06, C25D 15/02

(54) **PISTON RING AND METHOD FOR PRODUCING SAME**

(30) Priority: 13.02.2013 JP 2013026053
(71) Applicant: Kabushiki Kaisha Riken, Tokyo 102-8202 (JP)
(72) Inventor: SHINADA Manabu, Tokyo 130-0025 (JP); SUZUKI Masayuki, Tokyo 130-0025 (JP); MURAMATSU Gyo, Kashiwazaki-shi Niigata 945-8555 (JP); TAKASHINA Yousuke, Kashiwazaki-shi Niigata 945-8555 (JP)
(74) Representative: Luten, Martin Haaije
(86) International application number: PCT/JP2014/053094
(87) International publication number: WO 2014/126066

(57) **Abstract**

There is disclosed a piston ring having an annular piston ring base material and a plating film formed on the outer peripheral surface of the piston ring base material. The plating film is a chromium plating formed using a trivalent chromium plating solution which is an aqueous solution containing a trivalent chromium compound, a pH buffering agent, a sulfamate compound, an aminocarbonyl compound and a complexing agent that includes at least one selected from among dicarboxylic acids and their salts.

## Description

### Technical Field

The present invention relates to a piston ring with a chromium plating film, and to a method for producing it.

### Background Art

Chromium platings have high hardness and a low frictional coefficient, and are therefore widely used in sliding members that require wear resistance, such as piston rings. However, the plating solutions used for such platings employ large amounts of hexavalent chromium. Because the effects of hexavalent chromium on the human body is a concern, it is desirable to develop plating solutions that use trivalent chromium for which such concern is minimal.

As an example of a plating solution using trivalent chromium, PTL 1 describes the use of a plating solution having a composition of chromium chloride hexahydrate, boric acid, glycine, ammonium chloride and aluminum chloride hexahydrate. This plating solution has the advantage of allowing a satisfactory plating surface to be obtained. However, because chlorine gas can potentially be generated by decomposition of ammonium chloride in the plating solution, there are concerns regarding adverse effects on the working environment.

In addition, plating films formed using trivalent chromium cannot be easily increased in film thickness, and therefore it cannot be said that it is possible to provide plating solutions that are practical for piston ring uses that require thick plating films. With the aim of solving this problem, PTL 2 describes the use of ammonium sulfamate as an ammonium source, for electrodeposition of thick chromium platings with mirror surface gloss.

PTL 3 proposes adding urea to a solution containing trivalent chromium for the purpose of maintaining film water resistance by trivalent chromium.

The present applicant has previously proposed a trivalent chromium plating solution comprising an aqueous solution containing a trivalent chromium compound, a pH buffering agent, an aminocarboxylic acid compound, a sulfamate compound and an aminocarbonyl compound, as a trivalent chromium plating solution that can form a chromium plating having an industrially satisfactory film thickness and excellent film properties such as corrosion resistance and wear resistance (see PTL 4).

### Citation List

### Patent Literature

[PTL 1] International Patent Publication No. WO2008/136223
[PTL 2] Japanese Unexamined Patent Application Publication HEI No. 9-95793
[PTL 3] Japanese Unexamined Patent Application Publication HEI No. 6-173027
[PTL 4] International Patent Publication No. WO2012/133613

### Summary of Invention

### Technical Problem

Many strategies have thus been proposed for trivalent chromium plating solutions based on the desire to increase the film properties and improve the working environment, but yet further modifications are desired.

Methods for increasing the corrosion resistance of plating films are known, such as a method of actively forming dense mesh-like macrocracks in a chromium plating film, to minimize deterioration of the physical properties of the plating film caused by cracks reaching the base material or widening groove widths of the cracks.

On the other hand, macrocracks are one cause of detachment and disintegration of the film during use of the plating member, and therefore studies are ongoing toward improving corrosion resistance by minimizing generation of macrocracks. Macrocracks tend to occur naturally during the plating procedure but also under heat treatment conditions of 200°C or higher after plating.

It is therefore an object of the invention, for a piston ring having a plating film formed using a trivalent chromium plating solution, to effectively minimize generation of macrocracks in the plating film even under high-temperature heat treatment conditions of about 200 to 300°C, and to obtain excellent film properties in terms of both corrosion resistance and wear resistance.

### Solution to Problem

The present inventors have conducted much diligent research directed toward further improving the properties of plating films formed using trivalent chromium plating solutions, and as a result have completed this invention upon finding that if a chromium plating is formed by using a trivalent chromium plating solution containing a complexing agent selected from among dicarboxylic acids and their salts, in addition to a trivalent chromium plating solution containing a trivalent chromium compound, a pH buffering agent, a sulfamate compound and an aminocarbonyl compound, it is possible to more effectively minimize generation of macrocracks in the plating film even under heat treatment conditions of about 200 to 300°C, compared to the prior art, and to form a plating film with excellent film properties including corrosion resistance and wear resistance.

The piston ring to be provided by the invention has an annular piston ring base material and a plating film formed on the outer peripheral surface of the piston ring base material. The plating film is a chromium plating formed from a trivalent chromium plating solution which is an aqueous solution containing a trivalent chromium compound, a pH buffering agent, a sulfamate compound, an aminocarbonyl compound and a complexing agent that includes at least one selected from among dicarboxylic acids and their salts.

### Advantageous Effects of Invention

According to the invention there is provided a piston ring having a chromium plating that can more effectively minimize macrocracks in the plating film provided on the piston ring surface even under heat treatment conditions of about 200 to 300°C, and that has excellent film properties including corrosion resistance and wear resistance. Also, the plating film of the piston ring of the invention can have a film thickness that is sufficient for use as a piston ring. The trivalent chromium plating solution to be used to obtain the piston ring of the invention has minimized generation of noxious gases such as halogen gases by decomposition of components in the solution, and therefore has an excellent prolonged storage property and can contribute to an improved working environment.

### Brief Description of Drawings

Fig. 1 is a perspective view and an end view of an embodiment of a piston ring.
Fig. 2(a) is a scanning electron micrograph of a longitudinal section of a plating film, after heat treatment of the chromium plating obtained in Example 1. Fig. 2(b) is a scanning electron micrograph of a longitudinal section of a plating film, after heat treatment of the chromium plating obtained in Comparative Example 1.
Fig. 3 is a scanning electron micrograph of a longitudinal section of the plating film of Example 2.
Fig. 4 is a scanning electron micrograph of a longitudinal section of the plating film of Example 4.

### Description of Embodiments

The present invention will now be explained in detail based on its preferred embodiments. However, the present invention is not limited to the embodiments described below.

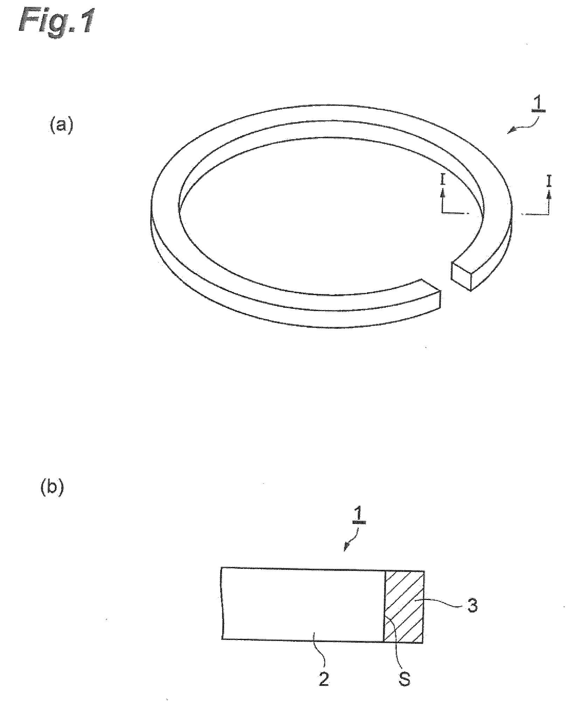

(a) of Fig. 1 is a perspective view of an embodiment of a piston ring, and (b) of Fig. 1 is an end view of the piston ring of (a) along direction I-I. The piston ring 1 of this embodiment comprises an annular piston ring base material 2 having two ends facing each other in the circumferential direction and an inner peripheral surface and an outer peripheral surface S, opposite each other in the radial direction, and a plating film 3 covering the outer peripheral surface S of the piston ring base material 2. The piston ring 1 has two ends facing each other in the circumferential direction, and an inner peripheral surface and an outer peripheral surface opposite each other in the radial direction. The outer peripheral surface of the piston ring 1 is a sliding surface that slides against a counterpart material such as a liner when the piston ring is used in an engine or the like. The plating film 3 is a chromium plating formed using the trivalent chromium plating solution described below. The piston ring 1 can be produced, for example, by a method comprising a step of forming a plating film 3 by use of a chromium plating solution on the outer peripheral surface S of the piston ring base material 2. The plating film may also be provided on a surface other than the outer peripheral surface S of the piston ring base material 2.

### Plating film

The trivalent chromium plating solution for formation of the chromium plating on the piston ring base material is an aqueous solution containing water as the medium. The plating solution contains a trivalent chromium compound, a pH buffering agent, an aminocarboxylic acid compound, a sulfamate compound, an aminocarbonyl compound, and at least one type of complexing agent selected from among carboxylic acids and their salts.

The trivalent chromium compound in the plating solution may be a water-soluble compound wherein the chromium valency is trivalent, without any particular restrictions. Examples of such compounds include inorganic acid chromium compounds such as chromium chloride, chromium nitrate, chromium sulfate and chromium phosphate, and organic acid chromium compounds such as chromium lactate, chromium gluconate, chromium glycolate, chromium oxalate, chromium malate, chromium maleate, chromium malonate, chromium citrate, chromium acetate and chromium tartrate. These trivalent chromium compounds may be used alone or in combinations of two or more. The concentration of the trivalent chromium in the plating solution may be 0.2 to 1.8 mol/liter or even 0.4 to 1.4 mol/liter, based on the volume of the plating solution, from the viewpoint of allowing chromium plating to be successfully accomplished.

The pH buffering agent in the plating solution is added for the purpose of adjustment to a suitable pH during chromium plating, and successfully accomplishing chromium plating. Examples of pH buffering agents suited for this purpose include boric acid, sodium borate, potassium borate, ammonium sulfate, phosphoric acid, disodium hydrogenphosphate, dipotassium hydrogenphosphate, sodium carbonate and sodium hydrogencarbonate. Boric acid, sodium borate and potassium borate, in particular, may be used. These compounds may be used alone, or a buffer system comprising a combination of two or more of them may be used. The pH buffering agent content may be an amount that can maintain the pH of the plating solution at 0.3 to 2.0 or 0.4 to 1.5. It is especially advantageous to use boric acid as the pH buffering agent, for micronization of the metal chromium crystals formed by reduction, in addition to its pH buffer action.

The sulfamate compound in the plating solution mainly performs the role of a supporting electrolyte in the plating solution, and is added for the purpose of increasing the electric conductivity of the plating solution to a prescribed level. Since the sulfamate compound also has pH buffer action in the plating solution, it further stabilizes the pH of the plating solution when used in combination with the pH buffering agent mentioned above. The sulfamate compound has catalytic action in the reaction in which the trivalent chromium is reduced, and it thereby exhibits a micronizing effect on the metal chromium crystals, as well as a gloss-producing effect on the chromium film. Examples of sulfamates to be used include ammonium sulfamate, sodium sulfamate and potassium sulfamate. These compounds may be used alone or in combinations of two or more different ones. The sulfamate may be added at 0.3 to 2.5 mol and especially 0.5 to 2 mol, with respect to 1 mol of the trivalent chromium in the plating solution. This is because addition in such an amount will lower the voltage during electrolytic plating, minimize increase in the liquid temperature of the plating solution, and reduce generation of chromium hydroxide that affects the properties of the plating film. Moreover, it will help stabilize the surface modifying effect of the chromium plating and stabilize deposition of the plating film. For the same reason, the sulfamate concentration of the plating solution may be 0.4 to 2.1 mol/liter and especially 0.6 to 1.9 mol/liter, based on the volume of the plating solution.

The aminocarbonyl compound in the plating solution is a compound having at least one carbonyl group and at least one amino group in the molecule. The aminocarbonyl compound has an effect of increasing the reduction rate of the trivalent chromium. The reason for this is believed to be as follows. Specifically, divalent chromium is generated during the process in which trivalent chromium is reduced to metallic chromium. Divalent chromium is thought to exist in a form adsorbed on the cathode and in an electrical double layer. In reduction of trivalent chromium to metallic chromium, reduction of divalent chromium is the rate-determining step. As a result of investigation by the present inventors, it was found that aminocarbonyl compounds have a function of increasing the rate of reduction of divalent chromium to metallic chromium. The present inventors believe that this causes the rate of reduction of trivalent chromium to metallic chromium to be increased.

The aminocarbonyl compound also has the function of minimizing olation of trivalent chromium. In the process in which trivalent chromium is reduced to metallic chromium, hydrolysis and olation reactions take place in the vicinity of the cathode, often inhibiting electrodeposition of the metallic chromium. When an aminocarbonyl compound is present in the plating solution, the compound forms a complex with trivalent chromium. Since the complexing reaction is a competitive reaction with olation of trivalent chromium, it is thereby possible to minimize olation of trivalent chromium. This also increases the reduction rate of trivalent chromium.

In addition to these advantageous effects, the aminocarbonyl compound supplies the nitrogen atoms in the compound to the plating film, having an effect of hardening the plating film, while also having an effect as a pH buffering agent to maintain the pH of the plating solution.

The aminocarbonyl compound exhibits a particularly notable effect when used in combination with the sulfamate compound as explained above. The details are as follows. The advantage of adding a sulfamate compound in the plating solution of this embodiment being as described above, stress in electrodeposits of the plating film tend to be increased as a result of using the sulfamate compound. This increase in the stress in electrodeposits is a cause of cracking in the plating film. In contrast, when a sulfamate compound and an aminocarbonyl compound are present together, the aminocarbonyl compound increases the chromium crystal growth rate and therefore inhibits magnetic field development, resulting in lower stress in electrodeposits. This effectively minimizes generation of cracks in the plating film. From this viewpoint, the amount of sulfamate added with respect to the aminocarbonyl compound used for this embodiment may be in the range of 0.4 to 1.5 as molar ratio.

Examples of aminocarbonyl compounds that may be used for this embodiment include compounds having at least one amide group formed by bonding of a carbonyl and an amino group, such as urea and carbamic acid. These compounds may be used alone or in combinations of two or more different ones. Urea, in particular, has a high degree of acidity of α-position hydrogens with respect to carbonyl groups, and therefore hydrogen can be easily withdrawn. The aminocarbonyl compound may be added at 0.2 to 3.0 mol and especially 0.3 to 2.2 mol with respect to 1 mol of the trivalent chromium in the plating solution. These addition amounts are particularly advantageous from the viewpoint of stabilization of the chromium complex in the plating solution during plating, minimizing generation of chromium hydroxide that affects the properties of the plating film, and promoting dense crystallization of the film. For the same reason, the concentration of the aminocarbonyl compound in the plating solution may be 0.1 to 4.4 mol/liter and especially 0.2 to 2.5 mol/liter.

In PTL 3 mentioned above as well there is described addition of urea as an aminocarbonyl compound to a plating solution of trivalent chromium. However, the reason for using urea as described in this document is to decompose the urea to produce ammonia, and to improve the water resistance of the plating film by the ammonia (paragraph [0033] of PTL 3). Thus, presumably either urea itself is not present in the plating solution described in the aforementioned publication, or even if it is present it is in a trace amount. Furthermore, the publication relates to a chromate chemical conversion treatment solution, and the role of urea is completely different from the plating solution of this embodiment.

The complexing agent selected from among dicarboxylic acids and their salts, to be included in the plating solution, forms a complex with the trivalent chromium in the plating solution, and it is added for the purpose of stabilizing the plating solution and for the purpose of successfully accomplishing chromium plating.

The present applicant had previously used an aminocarboxylic acid compound as a chemical agent with this type of function, but for this embodiment, a complexing agent selected from among dicarboxylic acids and their salts may be used to form a plating film that can effectively minimize generation of macrocracks even under heat treatment conditions of about 200 to 300°C, compared to using an aminocarboxylic acid compound, and that has more excellent film properties including corrosion resistance and wear resistance. A dicarboxylic acid is a compound having two carboxyl groups in the molecule. Examples of dicarboxylic acids include malonic acid, malic acid, maleic acid, tartaric acid, oxalic acid and succinic acid. Also, for this embodiment, the dicarboxylic acid may be in the form of a salt, such as alkali metal salt such as disodium malonate, sodium malate or sodium tartrate. These complexing agents may be used alone or in combinations of two or more different ones.

Among these, the complexing agent to be used for this embodiment may include a C2 to C3 dicarboxylic acid or its salt. With malonic acid, the effect of inhibiting generation of macrocracks in the plating film is particularly high and it is possible to form a plating film that is even more excellent in terms of film properties including corrosion resistance and wear resistance.

The complexing agent selected from among dicarboxylic acids and their salts may be added at 0.01 to 0.8 mol and especially 0.05 to 0.6 mol with respect to 1 mol of the trivalent chromium in the plating solution. These addition amounts are advantageous from the standpoint of obtaining a plating solution with a stabilized chromium complex, and accomplishing electrolytic plating in a proper manner. For the same reason, the concentration of the dicarboxylic acid or its salt in the plating solution may be 0.01 to 0.8 mol/liter and especially 0.05 to 0.5 mol/liter.

With the plating solution of this embodiment, having the components mentioned above, the rate of reduction of trivalent chromium to metallic chromium is high and generation of macrocracks seen in the plating film is more effectively inhibited, while it is easy to form a plating film having an industrially satisfactory film thickness. As a result of the nitrogen atoms from the aminocarbonyl compound being incorporated into the plating film, an advantageous effect is exhibited whereby the hardness of the plating film increases and the corrosion resistance and wear resistance, for example, are increased. In the case of a chromium plating film formed using a plating solution according to this embodiment, the use of a dicarboxylic acid or its salt as the complexing agent helps prevent organic materials from being included in the plating film, and more effectively inhibits generation of macrocracks even under heat treatment conditions of about 200 to 300°C. In addition, in a plating solution used to obtain a piston ring for this embodiment there is no need to add the ammonium chloride component that has been added to conventional plating solutions, and it is therefore possible to prevent generation of chlorine gas that results from decomposition of ammonium chloride, such that the working environment for plating may thus be improved. From this viewpoint, the plating solution of this embodiment does not need to contain an ammonium halide such as ammonium chloride. For example, the concentration of the ammonium halide in the plating solution may be 0.1 mol/liter or less, based on the volume of the plating solution.

Ceramic particles may also be added to the plating solution that is used to obtain the piston ring of this embodiment. The ceramic particles are incorporated into the plating film during the course of electrodeposition of metallic chromium. The ceramic particles are present mainly at the grain boundaries or defects of the plating film, and thus inhibit propagation of cracks while effectively alleviating fatigue, breakdown and detachment. In addition, the ceramic particles exposed on the surface can improve the wear resistance and seizing resistance and aid in forming an oil film, by friction and abrading action with the opposite sliding surface wherein the particles themselves act as a sliding surface in contact with the opposite sliding surface. The ceramic particles may have a mean particle diameter of 0.2 to 12 µm, particularly 0.4 to 6.0 µm and especially 0.5 to 3.0 µm. The mean particle diameter of the ceramic particles may be measured, for example, by a laser method.

If the mean particle diameter of the ceramic particles in the plating solution of this embodiment is within this range, the mean particle diameter of the ceramic particles incorporated into the plating film will usually be 0.2 to 8.0 µm, 0.3 to 5.0 µm or 0.5 to 3.0 µm. This will more notably exhibit effects such as alleviating fatigue, breakdown and detachment as mentioned above.

Related to the particle diameter, the ceramic particles may have shapes that are spherical, for example, from the viewpoint of improving the friction and abrading action with opposite sliding surfaces.

The type of ceramic particles is not particularly restricted so long as it does not adversely affect reduction of the trivalent chromium. From the viewpoint of facilitating incorporation into the plating film, a type with a zeta potential of 20 to 100 mV and especially 40 to 70 mV in the plating solution may be used. Examples of such ceramic particles include particles of Al₂O₃, Si₃N₄, AlN, Cr₃C₂, B₄C, TiC, WC, TiO₂, Cr₂O₃, c-BN, Fe₃O₄ and the like. These ceramic particles may be used alone or in combinations of two or more different ones.

If the ceramic particles are added to the plating solution of this embodiment in an amount for 5 to 100 g/liter and especially 10 to 60 g/liter, the flow property of the plating solution will be suitable, and it will thus be easier to obtain a more suitable amount of ceramic particles being incorporated into the plating film.

Because ceramic particles generally have a large specific gravity, they will tend to precipitate in the plating solution. Moreover, depending on the particle diameters, the ceramic particles will sometimes aggregate together in the plating solution. From the viewpoint of preventing this, aluminum chloride may be added as an anti-aggregation agent together with the ceramic particles, when the ceramic particles are added to the plating solution. Different types of surfactants may also be added to the plating solution as anti-aggregation agents. Surfactants include anionic surfactants such as monoalkylsulfuric acid salts and alkylpolyoxyethylene sulfates, cationic surfactants such as alkyltrimethylammonium salts and dialkyldimethylammonium salts, and nonionic surfactants such as polyoxyethylene alkyl ethers and fatty acid sorbitan esters.

Of these anti-aggregation agents, aluminum chloride exhibits advantageous effects of controlling the zeta potential of the ceramic particles to improve the dispersibility of the particles, and of preventing aggregation between the particles. In addition, it facilitates uniform incorporation of the ceramic particles into the plating film. From the viewpoint of even more notably exhibiting this effect, the aluminum chloride may be added at 0.005 to 0.5 mol and especially 0.01 to 0.3 mol with respect to 1 mol of the trivalent chromium in the plating solution. For the same reason, the aluminum chloride concentration of the plating solution may be 0.02 to 0.5 mol/liter and especially 0.05 to 0.3 mol/liter, based on the volume of the plating solution.

A water-soluble organic solvent may also be added to the plating solution that is used to obtain the piston ring of this embodiment. Addition of a water-soluble organic solvent can effectively prevent generation of burrs and chipping. Furthermore, when the ceramic particles mentioned above are added to the plating solution, the dispersibility of the particles is also improved. From this viewpoint, the water-soluble organic solvent may be added at 0.4 to 2.1 mol and especially 0.6 to 1.3 mol with respect to 1 mol of the trivalent chromium in the plating solution. Examples of water-soluble organic solvents include glycerin, polyethylene glycol, ethanol, methanol and n-propanol.

The plating solution of this embodiment includes a pH buffering agent as mentioned above, and a solution pH in the range of 0.3 to 2.0 or 0.5 to 1.5 may be maintained.

The water serving as the medium of the plating solution used to obtain a piston ring of this embodiment may be purified water, ion-exchanged water, industrial water, tap water, distilled water or the like. Of these, industrial water and tap water may be used from the standpoint of economy, assuming that it will not affect the storage stability or film properties of the plating solution.

The plating film of the piston ring of this embodiment may contain particles with an self-lubricating property, if necessary. By using a plating solution containing particles with an self-lubricating property, it is possible to form a plating film containing particles having an self-lubricating property.

By using particles with an self-lubricating property, the particles will have reduced friction force on the surface when exposed on the surface, thus allowing the wear resistance of the plating film to be further increased. Examples of particles with a self-lubricating property include graphite, molybdenum disulfide, tungsten disulfide, fluorine resin and boron nitride (h-BN) particles. The content of particles with a self-lubricating property may be 5 to 70 g/liter and especially 10 to 50 g/liter, based on the volume of the plating solution. The self-lubricating particles may also be in scaly form. When in scaly form, they may have thicknesses of 0.5 to 2 µm and diameters of 1 to 10 µm.

The plating solution of this embodiment may contain as necessary, in addition to the components mentioned above, known additives such as brighteners, surface control agents, colloidal silica and the like that are commonly used in the technical field, in amounts in ranges that are not outside of the gist of the invention.

As the conditions for using a plating solution containing such components to form a chromium plating, the temperature of the plating bath may be set to 20 to 60°C or 30 to 60°C. The current density may be set to 15 to 60A/dm² or 20 to 40A/dm². The anode used may be graphite, or a dimensionally stable anode (DSA) such as a Ti-Pt electrode, and the cathode used may be the piston ring base material that is to be plated.

In a plating film formed by electrolytic plating under the conditions described above, the chromium will usually be amorphous. An amorphous chromium plating film tends to have lower hardness than a crystalline one. Here, by conducting a step in which a plating film formed by electrolytic plating is subjected to heat treatment, it is possible to form a plating film as a crystalline chromium film. The heat treatment conditions may be 150 to 600°C, 200 to 600°C or 200 to 450°C, in air. The heating time may be 30 to 90 minutes, under conditions with the temperature in this range.

The plating film to be obtained by electrolytic plating under the conditions described above has a film thickness that is sufficient for application to a piston ring and industrially satisfactory. The film thickness may be 3 to 300 µm or 5 to 100 µm. The plating film obtained by the electrolytic plating under these conditions is also particularly superior in terms of film properties such as wear resistance and corrosion resistance. By thus using the trivalent chromium plating solution of this embodiment for plating of the sliding surface (outer peripheral surface) of a piston ring base material, it is possible to impart the necessary sliding properties to the piston ring.

### Piston ring base material

The piston ring base material is not particularly restricted, and may be appropriately selected from among materials commonly used in the technical field. The material of the piston ring base material may be, for example, a metal such as iron, or a ceramic of alumina or the like or a plastic having a conductive film attached to the surface. The piston ring base material has an outer diameter of 20 mm to 100 mm, an inner diameter of 15 mm to 950 mm and a thickness of 0.5 mm to 50 mm, for example.

### EXAMPLES

The present invention will now be explained in greater detail by examples. However, the scope of the invention is not limited to these examples.

### 1. Formation of plating film and its evaluation

### Examples 1 to 3 and Comparative Examples 1 and 2

The components listed in Table 1 below were added to water, to prepare a trivalent chromium plating solution having the composition listed in the same table. The obtained plating solution was used for electrolytic plating under the conditions listed in the table, forming a plating film on the surface of the base material. The anode used was high-density graphite. The cathode used was low-chromium steel, as one piston ring base material.

Also, as the base material to be plated, low chromium steel (dimensions: 5 × 5 × 20, 10R tip) was used for evaluation of the wear resistance of the plating film, and SUS304 (dimensions 50 × 100 × 5 mm) was used for evaluation of the corrosion resistance. Following plating treatment, the plated article was subjected to heat treatment in air at 200°C for 30 minutes, and evaluated.

### Comparative Example 3

The components listed in Table 1 below were added to water, to prepare a hexavalent chromium plating solution having the composition listed in the same table. The obtained plating solution was used for electrolytic plating under the conditions listed in the table. The cathode used was the same one as in Example 1. The anode used was a lead tin plate.

As the base material to be plated, low chromium steel (dimensions: 5 × 5 × 20, 10R tip) was used for evaluation of wear resistance of the plating film, and SUS304 (dimensions 50 × 100 × 5 mm) was used for evaluation of the corrosion resistance. Following plating treatment, the plated article was subjected to heat treatment in air at 200°C for 30 minutes, and evaluated.

**[Table 1]**

| | | Ex. 1 | Ex. 2 | Ex. 3 | Comp. Ex. 1 | Comp. Ex. 2 | Comp. Ex. 3 |
|---|---|---|---|---|---|---|---|
| | Chromium(III) chloride (mol/l)^{*1} | 0.81 | 0.81 | 0.81 | 1.62 | 1.62 | - |
| | Chromic anhydride (mol/l) | - | - | - | - | - | 2.5 |
| | Boric acid (mol/l) | 0.65 | 0.65 | 0.65 | 0.65 | 0.49 | |
| | Sulfuric acid (mol/l) | - | - | - | - | - | 0.025 |
| | Glycine (mol/l) | - | - | - | 0.67 | 0.67 | - |
| Plating solution | Ammonium sulfamate (mol/l) | 0.87 | 1.14 | 0.87 | 0.87 | - | - |
| | Ammonium chloride (mol/l) | - | - | - | - | 1.9 | - |
| | Urea (mol/l) | 0.33 | 0.47 | 0.33 | 1.1 | - | - |
| | Malonic acid (mal/l) | 0.10 | 0.10 | 0.10 | - | - | - |
| | Aluminium chloride (mol/l) | 0.22 | 0.3 | 0.3 | 0.3 | 0.37 | - |
| | Ceramic particles (g/l) | - | 20^{*2} | 10^{*3} | - | 30^{*2} | - |
| Plating conditions | Bath temperature (°C) | 40 | 40 | 45 | 45 | 50 | 45 |
| | Current density [A/d m²] | 30 | 30 | 30 | 30 | 40 | 50 |
| | pH | 0.6 | 0.7 | 0.6 | 1.0 | 0.1 | 0.1 |
| | Plating time (min) | 60 | 120 | 120 | 60 | 60 | 60 |

| | | | | | | | |
|---|---|---|---|---|---|---|---|
| *1: Nippon Chemical Industrial Co., Ltd., 40% chromium II chloride solution *2: Al₂O₃ (Showa Denko KK, Al-47-H, D₅₀ = 2.0 µm, ζ = 60 mV) *3: Si₃N₄ (Denki Kagaku Kogyo Co., Ltd., SN-9FWK, D₅₀ = 0.6 µm, ζ = 50 mV) | | | | | | | |

### Evaluation of plating film

The thickness of the chromium plating film of the obtained plated article was measured by the following method. In addition, the outer appearance of the surface of the plating film was visually observed and the degree of gloss and the presence or absence of cracking were examined. Also, the Vickers hardness of the plating film was measured by the method described below, and the wear resistance and corrosion resistance were evaluated by the methods also described below. For Examples 2 and 3 and Comparative Example 2, the content (degree of dispersion) of ceramic particles in the plating film was measured by the method described below. The results are shown in Table 2 below.

### Thickness of plating film

The thickness of a cross-section of the plating film was measured using a laser microscope (LEXTO OLS1100 by Olympus), at 400x magnification.

### Vickers hardness of plating film

The Vickers hardness of a cross-section of the plating film was measured using a micro-indentation hardness tester (HM-103 by Mitsutoyo Corp.), with a load of 200 gf × 15 sec.

### Wear resistance of plating film

The ring materials subjected to plating treatment, obtained in the examples and comparative examples, were evaluated for wear resistance of the plating films using a Kaken corrosive wear tester. Cast iron (FC250 conforming to JIS G 5501-1995) was used as the liner material serving as the friction partner.

The contact load in the friction tester was 39N. The friction velocity was 0.25 m/sec, and the friction distance was 5400 m (= 6 hours). The corrosion solution used was a sulfuric acid aqueous solution (pH = 2.0), dropped at 1.5 ml/min. The corrosion liquid temperature was ordinary temperature. The abrasion loss of the plating film was measured, and the value was used as an index of the wear resistance.

### Corrosion resistance of plating film

A SUS304 plated article, obtained in an example or comparative example, was prepared with a plating film area of 1 cm². The plated article was suspended in a sulfate and hydrochloride aqueous solution (1 liter volume) adjusted to a prescribed pH, using a vinyl fishline. The temperature of the aqueous solution was kept at 70°C and the aqueous solution was stirred for 1 hour. Next, the amount of chromium dissolved in the aqueous solution was measured with an ICP emission analyzer (ICPS-7510 by Shimadzu Corp.), as a standard of the corrosion resistance.

### Content of ceramic particles in plating films

The content referred to here is the area ratio of ceramic particles occupying the observation field per unit area when observing a cross-section of the plating film. The area ratio is measured by the following method. That is, a longitudinal section of the plating film was observed using a laser microscope (LEXTO OLS1100 by Olympus) at 1000x magnification. Also, the proportion of area occupied by the ceramic particles in a 30 µm-square frame was measured using the same laser microscope.

### Evaluation of macrocracking

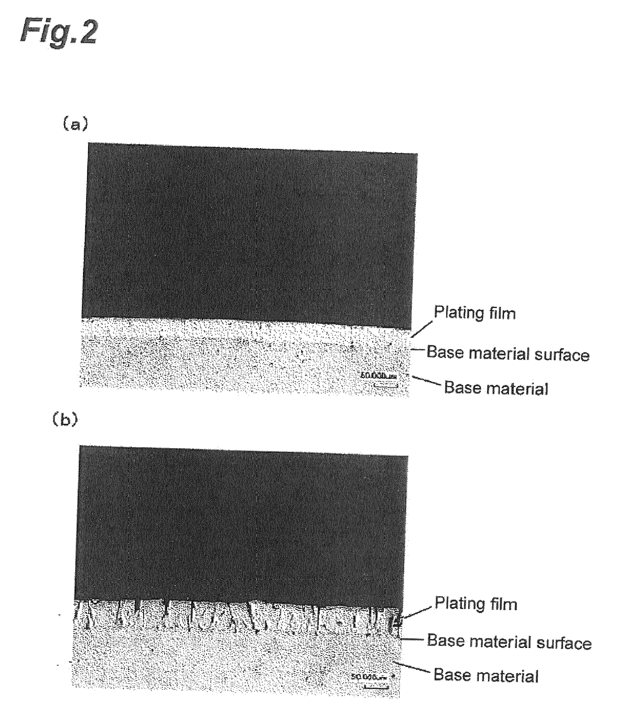

The plating film was subjected to heat treatment under the conditions shown in Table 2, a cross-section of the heat treated plating film was measured using a laser microscope (LEXTO OLS1100 by Olympus) at 1000x magnification after corrosion with Murakami's reagent, and the degree of any macrocracking was evaluated based on the following evaluation criteria. Fig. 2 shows scanning electron micrographs of longitudinal sections of the plating films of the chromium plated articles obtained in Example 1 and Comparative Example 1.
A: Less than 10 macrocracks
B: At least 10 and less than 20 macrocracks
C: At least 20 macrocracks

**[Table 2]**

| | | | | Ex. 1 | Ex. 2 | Ex. 3 | Comp. Ex. 1 | Comp. Ex. 2 | Comp. Ex. 3 |
|---|---|---|---|---|---|---|---|---|---|
| | Thickness (µm) | | | -40 | -95 | ∼90 | ∼65 | ∼60 | ∼40 |
| | Outer appearance | Gloss | | + | semi -gloss | semi -gloss | semi -gloss | semi -gloss | + |
| | | Presence of cracking | | - | - | - | + | + | + |
| | Vickers hardness (no heat treatment) | | | 700 | 730 | 860 | 710 | 700 | 920 |
| | Ceramic particle content (area%) | | | | 25 | 20 | - | 15 | - |
| | Wear resistance, ing material (plating film wear, µm) | | | 40 | 6.2 | 8 | 45 | 17.5 | 65 |
| Plating film | Wear resistance liner material (plating film wear, µm) | | | 1.1 | 1.4 | 0.9 | 1.1 | 1.0 | 1 |
| | Corrosion resistance (elution - mg) | Sulfuric acid | pH=0.6 | 9.30 | 7.59 | 7.34 | 9.7 | 11.25 | 50.00 |
| | | | pH=1.6 | 0.23 | 0.19 | 0.25 | 0.25 | 0.31 | 1.50 |
| | | | pH=2.6 | 0 | 0 | 0 | 0 | 0.00 | 0.00 |
| | | Hydrochloric acid | pH=0.6 | 38.40 | 14.40 | 12.00 | 40.52 | 19.50 | 105.00 |
| | | | pH=1.6 | 0.15 | 0.11 | 0.09 | 0.17 | 0.29 | 0.48 |
| | | | pH=2.6 | 0.07 | 0.03 | 0.03 | 0.09 | 0.11 | 0.19 |
| | Heat treatment | Temperature (°C) | | 200 | 200 | 300 | 200 | 200 | 300 |
| | | Time (hr) | | 1 | 1 | 1 | 1 | 1 | 1 |
| | | Vickers hardness | | 950 | 970 | 1270 | 1050 | 1020 | 810 |
| | | Presence of macrocracking | | A | A | A | C | C | A |

As clearly seen from the results in Table 2, conducting electrolytic plating of chromium using the plating solutions of each of the examples can form thick plating films within the same plating times as the plating solutions of the comparative examples. Furthermore, surface observation of the plating films obtained using the plating solutions of the examples was satisfactory, and they were found to be glossy. As particularly seen from comparing Examples 1 to 3 with Comparative Example 3, even using a trivalent chromium plating solution, it is possible to obtain a plating film having performance equivalent or superior to that obtained using a conventionally employed hexavalent chromium plating solution.

In addition, it is seen that when using the plating solutions of the examples containing malonic acid as a complexing agent, virtually no macrocracks were generated in the obtained plating films, even with heat treatment at 200 to 300°C.

Furthermore, as clearly seen by comparing Example 1 with Examples 2 and 3, adding ceramic particles to the plating solution further improved the wear resistance of the plating film.

### 2. Fabrication and evaluation of piston ring

As a piston ring base material there was prepared a top ring with a bore diameter of 73 mm, a width (radial direction) of 2.3 mm and a thickness (piston traveling direction) of 1.0 mm, fabricated from low-chromium steel for piston rings. With multiple piston ring base materials stacked in the axial direction, the plating solutions of the examples and comparative examples, shown in Table 1, were used to form chromium platings (plating films) on the outer peripheral surfaces of the piston ring base materials, after which the plating films were subjected to heat treatment in air at 200°C for 30 minutes.

Each piston ring was mounted on a 4-cylinder gasoline engine with a cylinder capacity of 1500 cm³ (bore diameter: 73 mm), and the engine was operated intermittently for 100 hours, under operating conditions of 5,700 rpm rotational speed and 4/4 load.

The piston ring was then removed out and the abrasion loss of the plating film and abraded depth of the cylinder were measured. The abrasion loss of the plating film was determined by measuring the difference in thickness of the piston ring before and after the test, at 5 locations at equal spacings in the circumferential direction of the piston ring. The abraded depth of the cylinder was determined by measuring 1/2 the difference in the cylinder diameter before and after the test, at 5 locations at equal spacings in the circumferential direction, near the center in the axial direction of the top ring sliding section. The engine performance was measured as the engine oil consumption immediately after the start of operation and immediately before completion of 100 hours of operation. The evaluation results are shown in Table 3.

**[Table 3]**

| | | Ex. 1 | Ex. 2 | Ex. 3 | Comp. Ex. 1 | Comp. Ex. 2 | Comp. Ex.3 |
|---|---|---|---|---|---|---|---|
| Plating film abraded depth [µm] | | 2-4 | 0.5-1 | 0.5-1 | 3-5 | 1-2 | 2-4 |
| Cylinder abraded depth [µm] | | 0-2 | 1-3 | 1-3 | 1-2 | 1-3 | 0-2 |
| Engine oil consumption [g/h] | Immediately after operation start | 40 | 42 | 39 | 42 | 40 | 43 |
| | Immediately before operation end | 46 | 48 | 46 | 48 | 48 | 48 |

As shown in Table 3, it was confirmed that when the piston ring of each of the examples was used in an engine, wear resistance was exhibited that was equivalent or superior to Comparative Example 3 which used a hexavalent chromium plating solution.

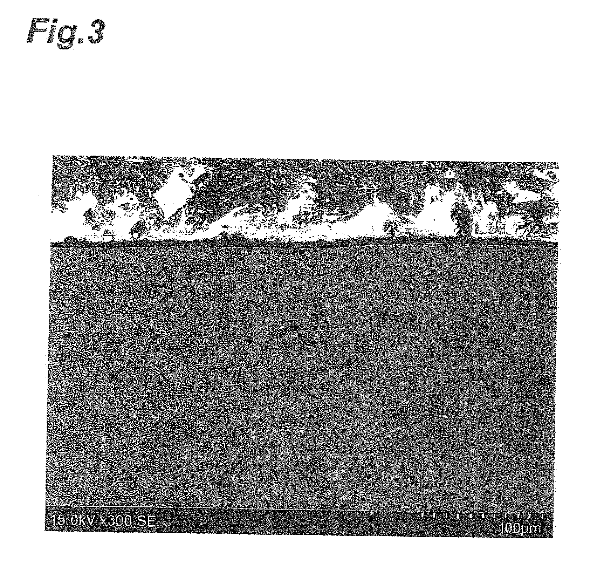

Fig. 3 is a scanning electron micrograph of a longitudinal section of the plating film obtained in Example 2. As shown in Fig. 3, it was confirmed that spherical ceramic particles had been incorporated into the plating film.

### Example 4

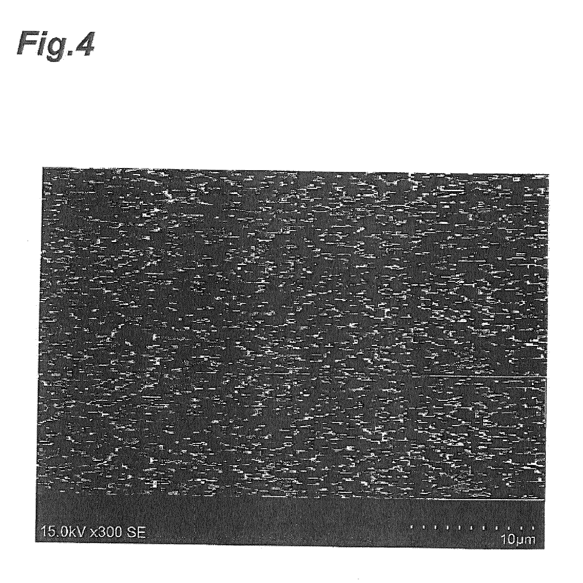

A trivalent chromium plating solution was prepared having the same composition as Example 1, except that scaly molybdenum disulfide particles with a mean thickness of 1 µm and a mean diameter of 6 µm were added at 30 g/liter, as particles with a self-lubricating property, and a piston ring with a plating film was fabricated by the same method as Example 1. Fig. 4 shows a scanning electron micrograph of a longitudinal section of the fabricated piston ring. The dark sections in Fig. 4 are molybdenum disulfide particles, conforming that a satisfactory plating film had been formed with scaly molybdenum disulfide particles aligned in the transverse direction intercepting the current. When the surface friction force of the plating film was measured, the value was 23% with respect to the surface friction force of the plating film of Example 1. A piston ring was also fabricated using the same plating solution as Example 1, except for containing 30 g/liter of spherical molybdenum disulfide particles with a mean particle diameter of 2 µm. The surface friction force of the plating film of the obtained piston ring was 67% with respect to the surface friction force of the plating film of Example 1.

### Industrial Applicability

According to the invention there is provided a piston ring having a chromium plating that more effectively minimizes macrocracks in the plating film even under heat treatment conditions of about 200 to 300°C, that has an industrially satisfactory film thickness, and that has excellent film properties including corrosion resistance and wear resistance. Furthermore, according to the invention there is provided a piston ring that can be obtained using a trivalent chromium plating solution, which minimizes generation of noxious gases such as halogen gases by decomposition of components in the solution, and therefore has an excellent prolonged storage property and improves the working environment.

### Reference Signs List

1: Piston ring, 2: piston ring base material, 3: plating film, S: outer peripheral surface of piston ring base material.

## Claims

1. A piston ring comprising:
an annular piston ring base material and
a plating film formed on the outer peripheral surface of the piston ring base material,
wherein the plating film is a chromium plating formed using a trivalent chromium plating solution which is an aqueous solution containing a trivalent chromium compound, a pH buffering agent, a sulfamate compound, an aminocarbonyl compound, and a complexing agent including at least one selected from among dicarboxylic acids and their salts.

2. A piston ring according to claim 1, wherein the chromium plating solution further contains ceramic particles.

3. A piston ring according to claim 2, wherein the ceramic particles have a zeta potential of 20 to 100 mV in the chromium plating solution.

4. A piston ring according to claim 2 or 3, wherein the chromium plating solution further contains an anti-aggregation agent for ceramic particles.

5. A piston ring according to claim 4, wherein the anti-aggregation agent includes aluminum chloride.

6. A piston ring according to any one of claims 1 to 5, wherein the trivalent chromium compound includes at least one selected from the group consisting of chromium chloride, chromium nitrate, chromium sulfate and chromium phosphate.

7. A piston ring according to any one of claims 1 to 6, wherein the pH buffering agent includes at least one selected from the group consisting of boric acid, sodium borate and potassium borate.

8. A piston ring according to any one of claims 1 to 7, wherein the sulfamate compound includes at least one selected from the group consisting of ammonium sulfamate, sodium sulfamate and potassium sulfamate.

9. A piston ring according to any one of claims 1 to 8, wherein the complexing agent includes malonic acid.

10. A piston ring according to any one of claims 1 to 9, wherein the chromium plating solution further contains particles with an self-lubricating property.

11. A method for producing a piston ring according to claim 1, comprising
forming a plating film on the outer peripheral surface of an annular piston ring base material using a chromium plating solution,
wherein the chromium plating solution is an aqueous solution containing a trivalent chromium compound, a pH buffering agent, a sulfamate compound, an aminocarbonyl compound, and a complexing agent including at least one selected from among dicarboxylic acids and their salts.

12. The method according to claim 11, further comprising heating the plating film.
